# EUROPEAN PATENT APPLICATION

(11) **EP 4 644 303 A1**
(43) Date of publication of application: **05.11.2025**
(21) Application number: 24173339.3
(22) Date of filing: 30.04.2024
(51) Int. Cl.: B65G 67/20, B65G 65/23

(54) **CARGO LOADING ARRANGEMENT**

(71) Applicant: MOS Engineering Oy, 76100 Pieksämäki (FI)
(72) Inventor: Häyrinen, Mika, 76100 Pieksämäki (FI); Pelkonen, Saku, 76100 Pieksämäki (FI)
(74) Representative: Papula Oy

(57) **Abstract**

A loading arrangement (1) for loading cargo (2) to a cargo space (3) having a cargo inlet (12) and a floor (4) arranged in an inclined position. The loading arrangement (1) comprises a roller chain arrangement (5) comprising at least one roller chain (5.1), which comprises rotatable first rollers (6) configured to be placed on the cargo space floor (4) and rotatable second rollers (7), on which cargo (2) to be loaded is arranged be placed, a cargo stopper (8) attached to the roller chain arrangement (5) and configured to prevent the cargo (2) from moving on the second rollers (7) past the cargo stopper (8), at least one chain wheel (9) around which the roller chain(s) (5.1) of the roller chain arrangement (5) is/are arranged, and a drive (10) arranged in force transmission connection with the at least one chain wheel (9) for rotating the chain wheel (9).

## Description

### FIELD OF TECHNOLOGY

The invention relates a loading arrangement for loading cargo to a cargo space of a transport container or transport vehicle. The invention also relates to a method of loading cargo.

### BACKGROUND

Loading and unloading cargo is a critical part of the logistics process for any type of cargo. Typically, cargo to be transported is in the form of loading pallets or containers, which are loaded to the cargo space of the transport container, truck trailer or other transport vehicle using forklift truck and/or hand pallet truck.

A drawback of the current loading solutions is that the person performing the loading must go inside the cargo space, which may be dangerous and slows down the cargo loading. Moreover, the loading pallets can be loaded one at the time into the cargo space, which also slows down the cargo loading.

### OBJECT OF THE INVENTION

The object of the invention is to provide a cargo loading arrangement by which cargo can be loaded into the cargo space more quickly.

### SUMMARY

The object of the invention can be achieved by the cargo loading arrangement according to claim 1.

The cargo loading arrangement according to the invention comprises a roller chain arrangement comprising at least one roller chain, which comprises rotatable first rollers configured to be placed on the cargo space floor and rotatable second rollers, on which cargo to be loaded is arranged be placed, a cargo stopper attached to the roller chain arrangement and configured to prevent the cargo from moving on the second rollers past the cargo stopper, at least one chain wheel around which the roller chain(s) of the roller chain arrangement is/are arranged. The cargo loading arrangement further comprises a drive arranged in force transmission connection with the at least one chain wheel for rotating the chain wheel.

Significant advantages can be achieved by means of the invention. The cargo loading arrangement according to the invention enables the automation of the cargo loading, which reduces manual work and thus the costs and improves the safety and reduces material damage during cargo loading. Moreover, the arrangement according to the invention allows cargo to be loaded into the cargo space more quickly than by conventional cargo loading devices, such as forklift trucks and hand pallet trucks.

According to an embodiment of the invention, the second rollers are spaced from the cargo space floor during the use of the loading arrangement.

According to an embodiment of the invention, consecutive first rollers are arranged at a distance from each other so that rotational axes of the first rollers are perpendicular to a loading direction of the cargo, and consecutive second rollers are arranged at a distance from each other so that rotational axes of the second rollers are perpendicular to the loading direction.

According to an embodiment of the invention, the rotational axes of the second rollers are arranged between the rotational axes of the first rollers in the loading direction.

According to an embodiment of the invention, the roller chain arrangement comprises a single roller chain or at least 2-6 parallel roller chains arranged at a distance from each other, and a chain wheel for each roller chain, around which chain wheel the roller chain is arranged.

According to an embodiment of the invention, adjacent roller chains are connected to each other by connecting members, such as connecting bars.

According to an embodiment of the invention, the loading arrangement comprises a cargo stopper attached to each roller chain.

According to an embodiment of the invention, the cargo stopper is detachable from the roller chain.

According to an embodiment of the invention, the cargo stopper has a first position, in which the cargo stopper prevents the cargo from moving on the second rollers past the cargo stopper, and a second position, in which the roller chain arrangement and the cargo stopper can be pulled out from under the cargo.

According to an embodiment of the invention, the loading arrangement comprises a ramp arrangement comprising an inclined ramp, on which the cargo space is arranged to be placed.

According to an embodiment of the invention, the inclination angle of the ramp is adjustable.

According to an embodiment of the invention, the ramp arrangement comprises a beam, to which the end of the ramp is hingedly connected, and an adjustment device configured to adjust the inclination angle of the ramp.

### BRIEF DESCRIPTION OF THE DRAWINGS

The present disclosure will be better understood from the following detailed description read in light of the accompanying drawings, wherein:

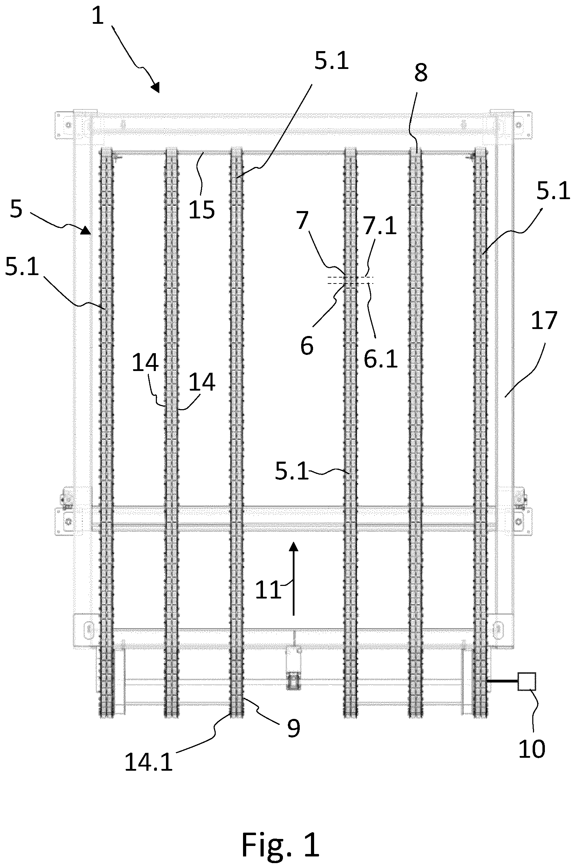

Fig. 1 shows a top view of the loading arrangement according to an embodiment of the invention,
Fig. 2 shows a side view of the loading arrangement of fig. 1 and a transport container, and
Figs. 3 to 8 show the loading arrangement of fig. 2 during the loading of the cargo.

### DETAILED DESCRIPTION

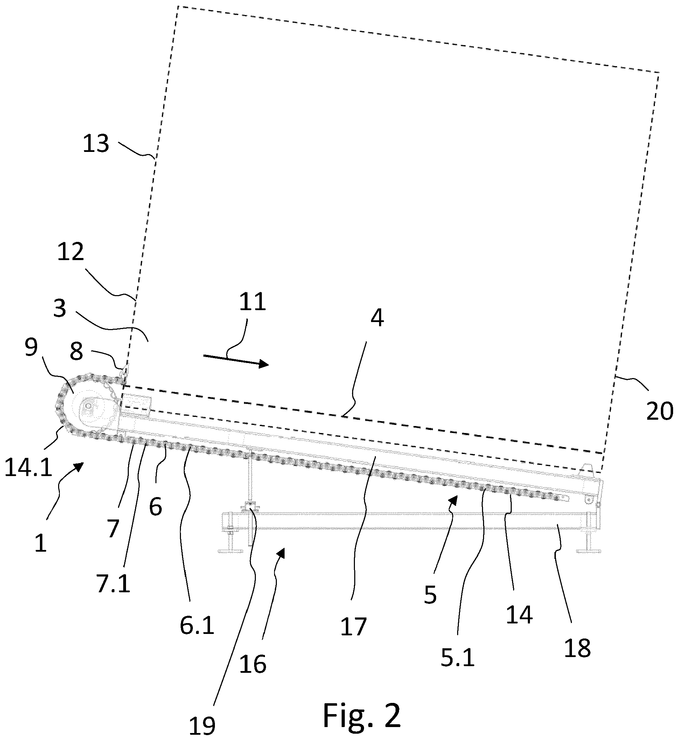

The drawings show a cargo loading arrangement 1 according to an embodiment of the invention. The loading arrangement 1 is used to load cargo 2 to a cargo space 3. The cargo space 3 may be a cargo space of a transport container 13, truck trailer or other transport vehicle. For the sake of clarity, the cargo space 3, such as the transport container 13, is shown with dashed lines in figs. 2-8. The cargo 2 to be loaded may be in the form of loading pallets, containers and/or loose piece items. The cargo space 3 may comprise an inlet 12, through which the cargo 2 to be loaded is transferred to the cargo space 3.

Before loading of the cargo 2, the cargo space 3 is placed in a position, in which the cargo space floor 4 is inclined downwards from the inlet 12 towards the end 20 of the cargo space 3. This can be done, for example, by placing the cargo space 3 on an inclined ramp 17. The inclination angle of the cargo space floor 4 with respect to the horizontal plane may be 2-8 degrees, typically 3-6 degrees. By means of a suitable inclination angle the loading of the cargo 2 may be performed by gravity.

The cargo loading arrangement 1 comprises a roller chain arrangement 5, which comprises at least one roller chain 5.1. The roller chain arrangement 5 may comprise a single roller chain 5.1, e.g. a roller bed, or 2-6 or more parallel roller chains 5.1 arranged at a distance from each other in a direction perpendicular to the transport direction 11 i.e. in the transfer direction of the cargo 2 from the inlet 12 towards the end 20 of the cargo space 3, which is opposite the inlet 12. The adjacent roller chains 5.1 may be connected to each other by elongated members 15, such as rods.

Each roller chain 5.1 comprises rotatable first rollers 6 and rotatable second rollers 7. The first rollers 6 and the second rollers 7 may be freely rotatable. In the cargo space 3, the first rollers 6 are configured to be placed on the cargo space floor 4 during the use of the cargo loading arrangement 1/cargo loading. The cargo 2 to be loaded is placed on the second rollers 7 during the loading of the cargo 2. In the cargo space 3, the second rollers 7 are spaced from the cargo space floor 4 during the loading of the cargo 2. The second rollers 7 are arranged at a different level than the first rollers 6.

The consecutive first rollers 6 are arranged at a distance from each other. The rotational axes 6.1 of the first rollers 6 are perpendicular to the loading direction 11. The consecutive second rollers 7 are arranged at a distance from each other. The rotational axes 7.1 of the second rollers 7 are perpendicular to the loading direction 11. Moreover, the rotational axes 7.1 of the second rollers 7 are arranged between the rotational axes 6.1 of the first rollers 6 in the loading direction 11. The loading direction 11 is indicated by arrow in the figures.

Each roller chain 5.1 may comprise two side supports 14 arranged at a distance from each other. The first rollers 6 and second rollers 7 are arranged between the side supports 14. The axles of the first rollers 6 and second rollers 7 are mounted on the side supports 14 at their ends. The side supports 14 may comprise separate support members 14.1, which are hingedly connected to each other at their ends.

The roller chain arrangement 5 is movable from the outside of the cargo space 3 via the inlet 12 into the cargo space 3 and towards the end 20 of the cargo space 3, which is opposite the inlet 12.

The loading arrangement 1 further comprises a chain wheel 9, around which the roller chain(s) 5.1 of the roller chain arrangement 5 is/are arranged. The chain wheel 9 may be a toothed wheel that meshes with the roller chain 5.1 to transmit motion. In case the loading arrangement 1 comprises more than one roller chain 5.1, the loading arrangement 1 may comprise a separate chain wheel 9 for each roller chain 5.1. The chain wheels 9 may be mounted on the same axle. Alternatively, the loading arrangement 1 may comprise a single chain wheel 9, around which all the roller chains 5.1 are arranged. The chain wheel 9 is arranged outside the cargo space 3, for example in front the of the inlet 12.

The cargo loading arrangement 1 also comprises a drive 10, such as an electric drive, arranged in force transmission connection with the chain wheel(s) 9. The drive 10 is configured to rotate chain wheel(s) 9 and thus pull the roller chain(s) 5 and release the roller chain(s) 5 so that the roller chain(s) 5 and the cargo 2 placed on it can be moved by gravity along the cargo space floor 4 towards the end 20 of the cargo space 3.

The loading arrangement 1 comprises a cargo stopper 8 attached to the roller chain 5.1. The cargo stopper 8 may be attached to the end of the roller chain 5.1. The cargo stopper 8 is configured to prevent the cargo 2 from moving on the second rollers 7 in the loading direction 11 past the cargo stopper 8 during the loading of the cargo 2. The cargo stopper 8 may be detachable from the roller chain 5.1. Alternatively, the cargo stopper 8 may have a first position, in which the cargo stopper 8 prevents the cargo 2 from moving on the second rollers 7 in the loading direction 11 past the cargo stopper 8, and a second position, in which roller chain 5.1 and the cargo stopper 8 can be pulled out from under the cargo 2. In the first position the cargo stopper 8 may extend upwards from the roller chain 5.1. In the second position the cargo stopper 8 may be flush with the roller chain 5.1. Each roller chain 5.1 may be provided with the cargo stopper 8.

The cargo loading arrangement 1 may further comprise a ramp arrangement 16, which comprises a ramp 17, on which the cargo space 3, e.g. the transport container 13 and/or cargo space of the transport truck, is arranged to be placed. The inclination angle of the ramp 17 may be 2-8 degrees, typically 3-6 degrees with respect to the horizontal plane. During the loading of the cargo 2 the cargo space floor 4 is inclined downwards in the loading direction 11. The inclination angle of the cargo space floor 4 may be equal to that of the ramp 17, i.e. 2-8 degrees, typically 3-6 degrees with respect to the horizontal plane. The ramp arrangement 16 may comprise a horizontal beam 18, to which the end of the ramp 17 is hingedly connected. The inclination angle of the ramp 17 may be adjustable by an adjustment device 19, such as one or more screw jack arranged between the horizontal beam 18 and the ramp 17. The chain wheel (s) 9 may be mounted on the first end of the ramp 17. The second end of the ramp 17 may be hingedly mounted on the horizontal beam 18.

The cargo loading arrangement 1 may be operated as follows. As shown in fig. 2, the cargo space 3 is transferred on the ramp 17 in front of the chain wheel (s) 9. The inclination angle of the ramp 17 is set as desired by the adjustment device 19. The roller chain arrangement 5 may be outside the cargo space 3 or may be moved partly inside the cargo space 3 via the cargo inlet 12.

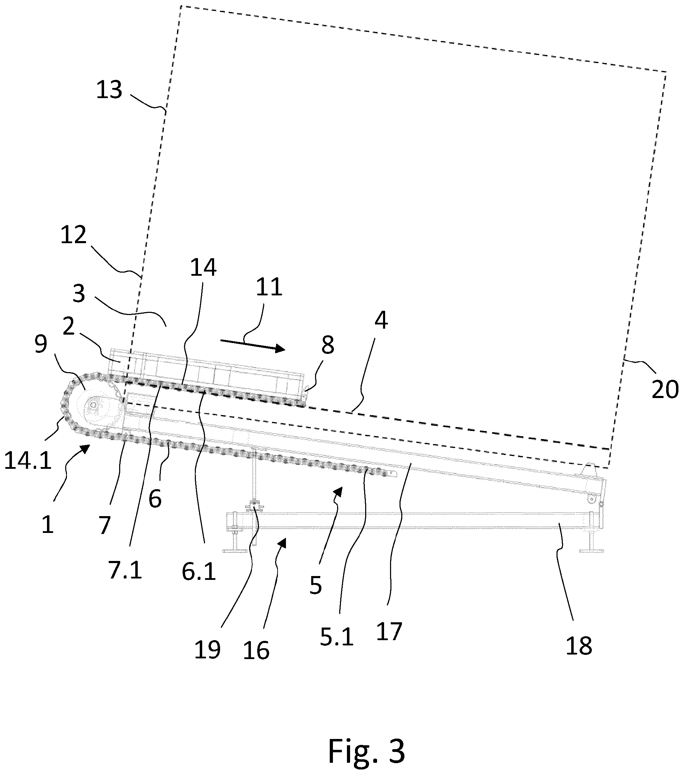

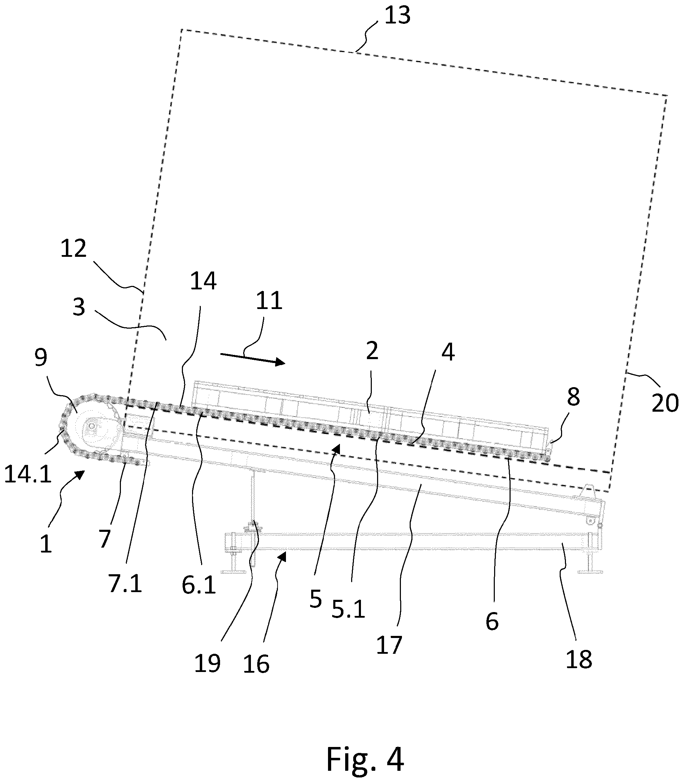

In figs. 3 and 4, the cargo 2, e.g. loading pallet, to be loaded is lowered onto the second rollers 7 of the roller chain(s) 5.1, for example by a forklift truck. The cargo 2 is moved on the second rollers 7 against the cargo stopper 8. The chain wheel 9 is rotated in the first direction, i.e. loading direction 11, by the drive 10 so that the first rollers 6 of the roller chain(s) 5.1 rotate on the cargo space floor 4 and thus the roller chain (s) 5.1 and cargo 2 move in the loading direction 11 by gravity. The chain wheel 9 may be stopped, and more cargo 2 can be added onto the second rollers 7 of the roller chain(s) 5.1. The chain wheel 9 is rotated by the drive 10 into the first direction so that the roller chain arrangement 5 and cargo 2 move to the desired point in the cargo space 3. The drive 10 is stopped.

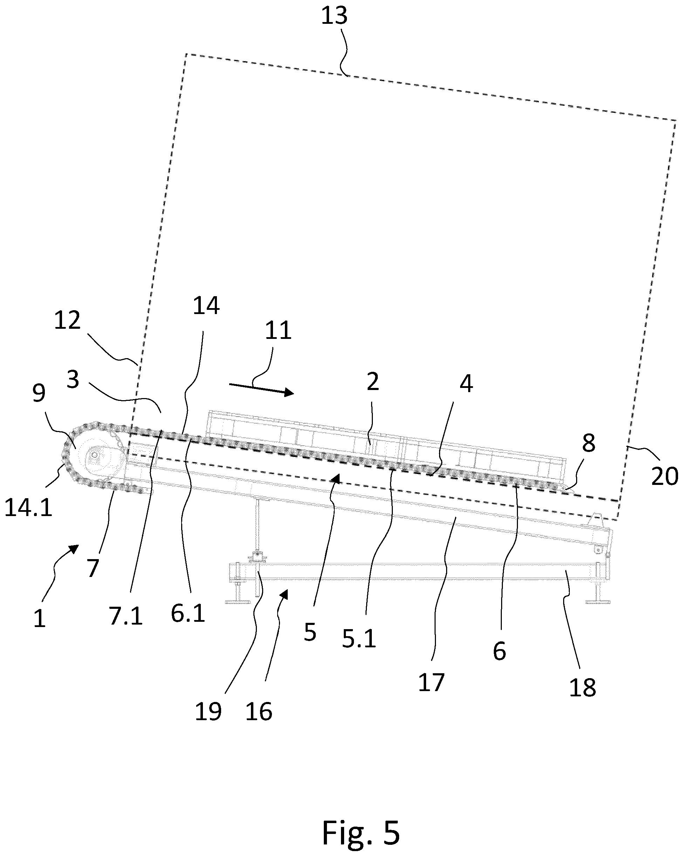

In fig. 5, the cargo stopper 8 is detached from the roller chain 5.1 or moved to a second position, in which the roller chain 5.1 and the cargo stopper 8 can be pulled out from under the cargo 2.

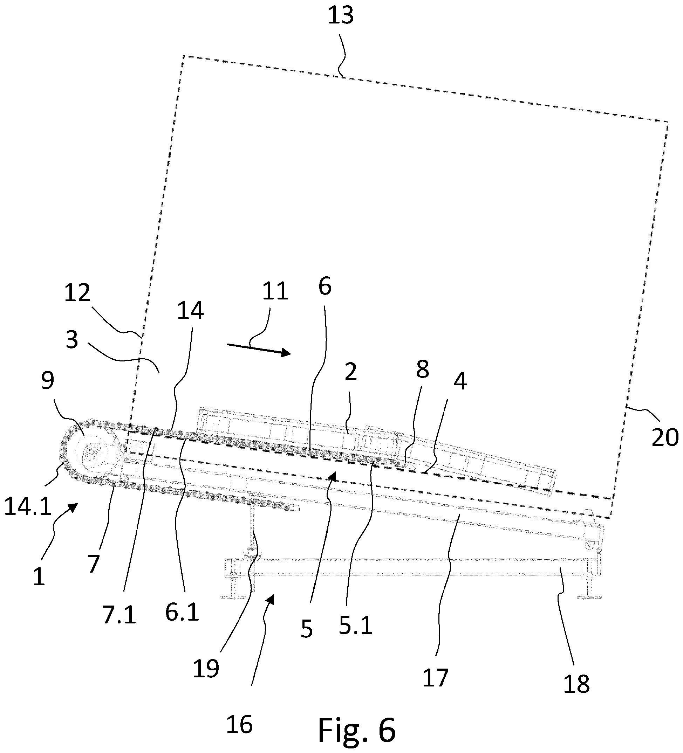

As shown in fig. 6, the chain wheel 9 is rotated in the second direction so that the roller chain arrangement 5 and the cargo stopper 8 are pulled out from under the cargo 2, and the cargo 2 moves from the roller chain(s) 5.1 to the cargo space floor 4.

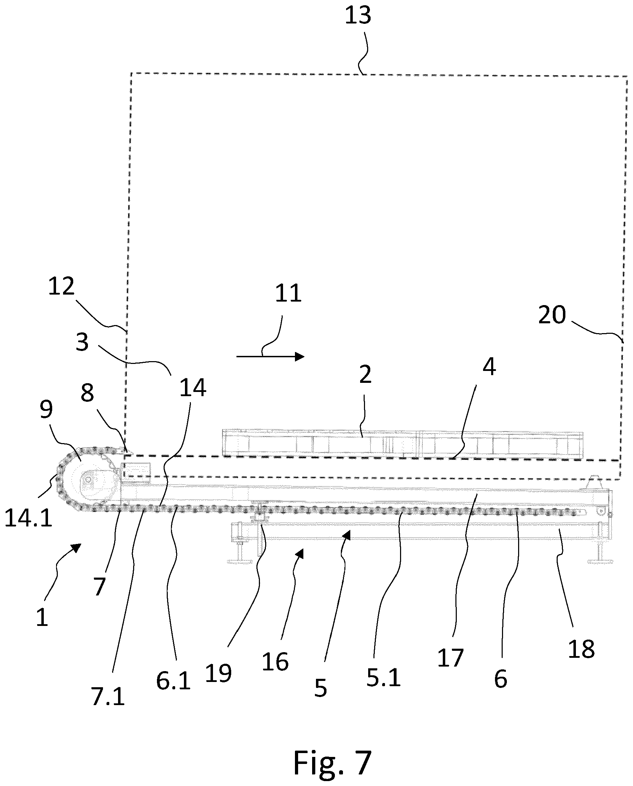

In fig. 7 the cargo loading has been completed and the ramp 17 is lowered to back to the horizontal position. The cargo space 3, i.e. the transport container or the transport vehicle, is removed from the ramp 17.

It is obvious to the person skilled in the art that the invention is not limited solely to the embodiments presented above, but that it can be varied within the scope of the claims presented below.

## Claims

1. A loading arrangement (1) for loading cargo (2) to a cargo space (3) having a cargo inlet (12) and a floor (4) arranged in an inclined position, **characterized in that** the loading arrangement (1) comprises
- a roller chain arrangement (5) comprising at least one roller chain (5.1), which comprises rotatable first rollers (6) configured to be placed on the cargo space floor (4) and rotatable second rollers (7), on which cargo (2) to be loaded is arranged be placed,
- a cargo stopper (8) attached to the roller chain arrangement (5) and configured to prevent the cargo (2) from moving on the second rollers (7) past the cargo stopper (8),
- at least one chain wheel (9) around which the roller chain(s) (5.1) of the roller chain arrangement (5) is/are arranged, and
- a drive (10) arranged in force transmission connection with the at least one chain wheel (9) for rotating the chain wheel (9).

2. The loading arrangement (1) according to claim 1, **characterized in that** in the cargo space (3), the second rollers (7) are spaced from the cargo space floor (4) during the use of the loading arrangement (1).

3. The loading arrangement (1) according to claim 1 or 2, **characterized in that** consecutive first rollers (6) are arranged at a distance from each other so that rotational axes (6.1) of the first rollers (6) are perpendicular to a loading direction (11) of the cargo (2), and consecutive second rollers (7) are arranged at a distance from each other so that rotational axes (7.1) of the second rollers (7) are perpendicular to the loading direction (11).

4. The loading arrangement (1) according to any of the preceding claims, **characterized in that** the rotational axes (7.1) of the second rollers (7) are arranged between the rotational axes (6.1) of the first rollers (6) in the loading direction (11).

5. The loading arrangement (1) according to claim any of the preceding claims, **characterized in that** the roller chain arrangement (5) comprises a single roller chain (5.1) or at least 2-6 parallel roller chains (5.1) arranged at a distance from each other, and a chain wheel (9) for each roller chain (5.1), around which chain wheel (9) the roller chain (5.1) is arranged.

6. The loading arrangement (1) according to claim 5, **characterized in that** adjacent roller chains (5.1) are connected to each other by connecting members (15), such as connecting bars.

7. The loading arrangement (1) according to claim 5 or 6, **characterized in that** the loading arrangement (1) comprises a cargo stopper (8) attached to each roller chain (5.1).

8. The loading arrangement (1) according to any of the preceding claims, **characterized in that** the cargo stopper (8) is detachable from the roller chain (5.1).

9. The loading arrangement (1) according to any of the preceding claims, **characterized in that** the cargo stopper (8) has a first position, in which the cargo stopper (8) prevents the cargo (2) from moving on the second rollers (7) past the cargo stopper (8), and a second position, in which the roller chain arrangement (5) and the cargo stopper (8) can be pulled out from under the cargo (2).

10. The loading arrangement (1) according to any of the preceding claims, **characterized in that** the loading arrangement (1) comprises a ramp arrangement (16) comprising an inclined ramp (17), on which the cargo space (3) is arranged to be placed.

11. The loading arrangement (1) according to claim 10, **characterized in that** the inclination angle of the ramp (17) is adjustable.

12. The loading arrangement according to claim 10 or 11, **characterized in that** ramp arrangement (16) comprises a beam (18), to which the end of the ramp (17) is hingedly connected, and an adjustment device (19) configured to adjust the inclination angle of the ramp (17).

13. A method of loading cargo (2) to a cargo space (3) having an inclined cargo space floor (4) using the cargo loading arrangement (1) according to any of the preceding claims, **characterized in** the cargo space (3) is placed in front of the chain wheel(s) (9), cargo (2) to be loaded is lowered onto the second rollers (7) of the roller chain(s) (5.1) of the roller chain arrangement (5), the cargo (2) is moved on the second rollers (7) against the cargo stopper (8), chain wheel(s) (9) is/are rotated in a first direction by the drive (10) so that the roller chain(s) (5) and cargo (2) move on the cargo space floor (4) into the loading direction (11) by gravity, rotation of the chain wheel(s) (9) is stopped, the cargo stopper (9) is detached from the roller chain (5.1) or moved to a second position, and chain wheel(s) (9) is rotated in the second direction so that the roller chain arrangement (5) and the cargo stopper (8) are pulled out from under the cargo (2).
